# FASCICULE DE BREVET EUROPEEN

(11) **EP 1 621 751 B1**
(45) Date de publication et mention de la délivrance du brevet: **13.06.2007**
(21) Numéro de dépôt: 05291559.2
(22) Date de dépôt: 20.07.2005
(51) Int. Cl.: F02K 1/80, F02K 1/12

(54) **Tuyère convergente de turboréacteur**
Konvergente Schubdüse eines Strahltriebwerks
Jet engine convergent nozzle

(30) Priorité: 28.07.2004 FR 0408335
(43) Date de publication de la demande: 01.02.2006
(73) Titulaire: SNECMA, 75015 Paris (FR)
(72) Inventeur: Blanchard, Stéphane, 77590 Chartrettes (FR); Arnold, Thibault, 77300 Fontainebleau (FR)
(74) Mandataire: Ramey, Daniel

(56) Documents cités:
- EP-A- 0 100 697
- EP-A- 0 364 360
- EP-A- 0 697 514
- EP-A- 0 750 107
- EP-A- 1 517 032
- US-A- 4 637 550

## Description

La présente invention concerne une tuyère convergente de turboréacteur formée en sortie d'un canal de postcombustion par une couronne de volets articulés comprenant des volets commandés disposés en alternance avec des volets suiveurs.

Ces volets peuvent occuper une position dans laquelle ils sont sensiblement dans le prolongement de la paroi du canal de postcombustion, et une position dans laquelle ils sont inclinés sur l'axe du canal de postcombustion pour augmenter la poussée.

Ces volets qui sont métalliques dans la technique connue, sont au contact des gaz à température élevée sortant de la chambre de postcombustion du turboréacteur et ont de ce fait une durée de vie relativement courte, que l'on pourrait augmenter en réalisant les volets dans un matériau supportant mieux les températures élevées, tel par exemple qu'un matériau composite à matrice céramique (CMC selon l'appellation couramment utilisée dans la technique), ce qui permettrait également de réduire le poids de ces volets sans augmenter sensiblement leur coût.

Le document EP-A-0 364 360 décrit un procédé de fabrication de volets de tuyère de turboréacteur en matériau composite du type CMC.

Cependant, le montage de volets chauds en matériau CMC dans une tuyère convergente du type précité pose le problème de l'étanchéité entre les volets au niveau du joint périphérique agencé en sortie du canal de postcombustion : les volets en matériau CMC ont une épaisseur plusieurs fois supérieure à celle des volets métalliques et, du fait de leur constitution en nappes, ne peuvent avoir de rayon de courbure faible dans les zones de raccordement entre les volets adjacents. Cela se traduit par des sections de fuite relativement importantes des gaz de postcombustion dans ces zones de raccordement, ce qui diminue la poussée fournie en mode de postcombustion.

Par ailleurs, il ne serait pas satisfaisant d'équiper des volets en matériau CMC de parties métalliques à leurs extrémités coopérant avec le joint périphérique précité, en raison des dilatations thermiques différentielles entre ces parties métalliques et le matériau composite.

L'invention a notamment pour but d'apporter une solution simple, économique et efficace à ce problème.

Elle a pour objet une tuyère convergente de turboréacteur à volets chauds en matériau CMC, sans sections de fuite importantes aux raccordements entre volets sur le joint périphérique d'étanchéité agencé en sortie du canal de postcombustion.

Elle propose à cette effet une tuyère convergente de turboréacteur selon la revendication 1, comprenant une couronne de volets articulés formée de volets commandés et de volets suiveurs disposés en alternance et coopérant à leur extrémité amont avec un joint périphérique d'étanchéité agencé en sortie d'un canal de postcombustion, caractérisée en ce que les volets sont réalisés en matériau composite à matrice céramique et sont formés d'une pièce avec des moyens d'appui sur le joint périphérique précité à leur extrémité amont et avec des moyens d'appui sur les bords longitudinaux des volets adjacents, réalisant une étanchéité longitudinale entre les volets.

Les volets sont également formés d'une pièce à leur extrémité amont avec des moyens d'articulation en rotation sur les extrémités amont des volets adjacents. Ceci permet de diminuer les sections de fuite au niveau des raccordements entre les volets adjacents, et donc d'empêcher ou réduire les fuites des gaz de postcombustion à ces raccordements.

Chacun des volets commandés et des volets suiveurs est ainsi formé d'une seule pièce avec ses moyens d'appui sur le joint d'étanchéité, ses moyens d'étanchéité longitudinaux et ses moyens d'articulation en rotation. Le nombre de pièces pour la réalisation de la tuyère convergente selon l'invention est donc faible. Les volets sont entièrement réalisés en matériau composite à matrice céramique, ce qui réduit le poids de la tuyère.

Les moyens d'articulation en rotation précités sont de préférence des moyens d'articulation à rotule.

Dans un mode de réalisation préféré de l'invention, l'extrémité amont de chaque volet comporte une partie cylindrique de révolution qui est orientée transversalement par rapport à l'axe de tuyère et tangentiellement au joint périphérique et dont une surface cylindrique convexe est en appui sur le joint périphérique. Les extrémités latérales de la partie cylindrique de révolution sont conformées en portions de sphère et forment des moyens d'articulation en rotation sur les volets adjacents. Les portions de sphère formées à l'extrémité amont des volets commandés constituent par exemple des rotules, et les portions de sphère formées à l'extrémité amont des volets suiveurs sont des logements recevant les portions de sphère des volets commandés.

L'étanchéité longitudinale entre les volets est réalisée par appui des volets commandés sur les bords longitudinaux des volets suiveurs, ces bords longitudinaux étant à section transversale de forme incurvée convexe.

L'étanchéité longitudinale entre les volets articulés est ainsi assurée de façon simple, par les volets eux-mêmes. La forme incurvée convexe des bords longitudinaux des volets suiveurs permet de limiter l'usure par frottement des volets entre eux, le frottement se situant sur les nappes supérieures du volet suiveur.

Dans certains cas, le joint périphérique d'étanchéité est réalisé en matériau composite à matrice céramique, pour éviter des problèmes d'usure à l'inclinaison des volets vers l'axe de la tuyère, lorsque les parties cylindriques amont de ces volets frottent sur le joint d'étanchéité.

Pour réduire encore l'usure par frottement des volets, ceux-ci peuvent être recouverts au moins partiellement d'un revêtement anti-abrasion, notamment à leur extrémité amont et le long de leurs bords longitudinaux.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en coupe axiale d'une tuyère convergente de turboréacteur ;
- la figure 2 est une vue partielle, à plus grande échelle, en coupe selon la ligne II-II de la figure 1 ;
- la figure 3 est une vue schématique en perspective d'un volet commandé et d'un volet suiveur selon l'invention ;
- la figure 4 est une vue schématique en perspective et de dessous d'un volet commandé ;
- la figure 5 est une vue schématique en perspective et de dessus d'un volet suiveur ;
- la figure 6 est une vue schématique partielle en coupe transversale de deux volets selon l'invention à leur extrémité amont ;
- la figure 7 est une vue schématique en perspective d'une variante de réalisation d'un volet suiveur selon l'invention ;
- la figure 8 est une vue schématique partielle en coupe transversale des volets à leur extrémité amont selon la variante de réalisation de l'invention de la figure 7.

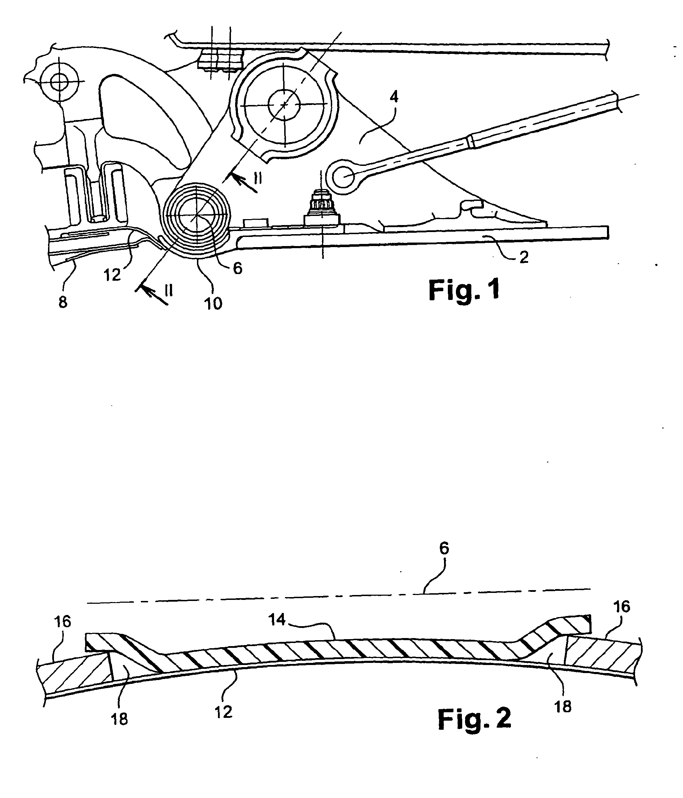

On se réfère d'abord à la figure 1 qui représente schématiquement, en vue de côté, un volet commandé d'une tuyère convergente en sortie d'un canal de postcombustion d'un turboréacteur.

Ce volet commandé 2 est porté par une pièce support 4 reliée à des moyens de manoeuvre pour pivoter autour d'un axe 6, à son extrémité amont, en sortie du canal de postcombustion 8.

L'extrémité amont 10 du volet commandé 2 est en appui sur un joint périphérique d'étanchéité 12 du type à lèvre, de façon à ce que les gaz chauds sortant du canal de postcombustion 8 s'écoulent à l'intérieur de la tuyère formée par les volets.

De façon connue, les volets de la tuyère convergente agencés en sortie du canal 8 de postcombustion comprennent des volets commandés 2, disposés en alternance avec des volets suiveurs qui ne sont pas reliés directement à des moyens de manoeuvre, mais qui suivent le mouvement des volets commandés 2.

Lorsque les volets sont métalliques, les jonctions entre volets adjacents, au niveau de leurs extrémités amont 10 en appui sur le joint périphérique d'étanchéité 12, peuvent être relativement étanches, les bords latéraux des volets commandés et des volets suiveurs pouvant être conformés avec de faibles rayons de courbure pour s'adapter les uns aux autres en créant de très faibles sections de fuite entre eux, ce qui garantit un bon guidage des gaz de postcombustion à l'intérieur de la tuyère formée par ces volets.

On a déjà proposé de réaliser ces volets en un matériau résistant mieux que l'acier aux températures élevées des gaz de postcombustion, et notamment en un matériau du type CMC (composite à matrice céramique), ces volets étant plus légers que des volets métalliques mais ayant une épaisseur supérieure en raison de leur constitution par une superposition de nappes de fibres.

Cette constitution a également pour conséquence, comme représenté en figure 2, que les sections de fuite 18 entre les extrémités amont des volets commandés 14 et des volets suiveurs 16, au niveau du joint périphérique 12, sont relativement importantes, essentiellement en raison du rayon de courbure relativement important qu'il faut donner aux bords latéraux de ces volets en CMC dans leur zone de recouvrement mutuel.

Typiquement, ce rayon de courbure est de l'ordre de 10 mm quand l'épaisseur du volet en CMC est de l'ordre de 5 mm, alors qu'il est inférieur à 1 mm dans le cas d'un volet métallique.

L'invention permet notamment de résoudre ce problème en supprimant les sections de fuite 18 importantes dans les zones de recouvrement amont des volets commandés 14 et des volets suiveurs 16 en CMC d'une tuyère convergente en sortie d'un canal de postcombustion d'un turboréacteur.

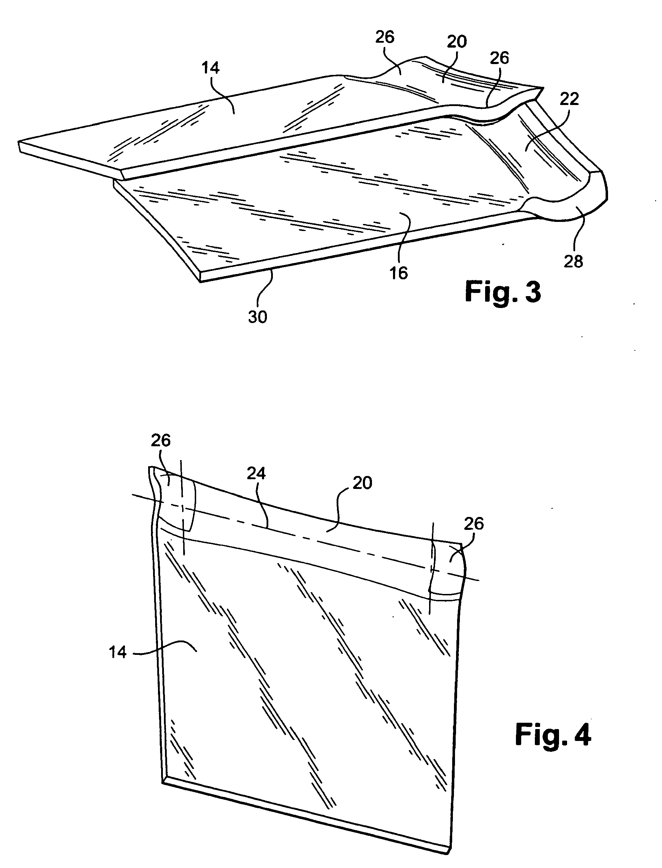

Pour cela, et comme représenté schématiquement aux figures 3 à 6, les volets commandés 14 et suiveurs 16 sont réalisés chacun d'une seule pièce en CMC et ont une extrémité amont 20, 22 respectivement qui est arrondie sensiblement en quart de cylindre ayant un axe transversal 24 qui est destiné à coïncider avec l'axe 6 de pivotement du volet quand celui-ci est monté en sortie du canal de postcombustion 8 comme représenté en figure 1.

Les extrémités latérales de cette partie arrondie cylindrique 20, 22 sont formées par des portions de sphère 26, 28 respectivement, qui sont centrées sur l'axe 24 de la partie arrondie cylindrique 20, 22.

Les concavités des parties cylindriques 20, 22 et des portions de sphère 26, 28 sont orientées vers l'extérieur, par rapport à l'axe de la turbine lorsque les volets sont en place, de façon à ce que les surfaces arrondies des extrémités amont des volets qui sont en appui sur le joint périphérique 12 soient convexes et que les portions de sphère 26, des extrémités amont des volets commandés 14 forment des rotules reçues dans des portions de cage sphérique formées par les portions de sphère 28 des extrémités amont 22 des volets suiveurs 16.

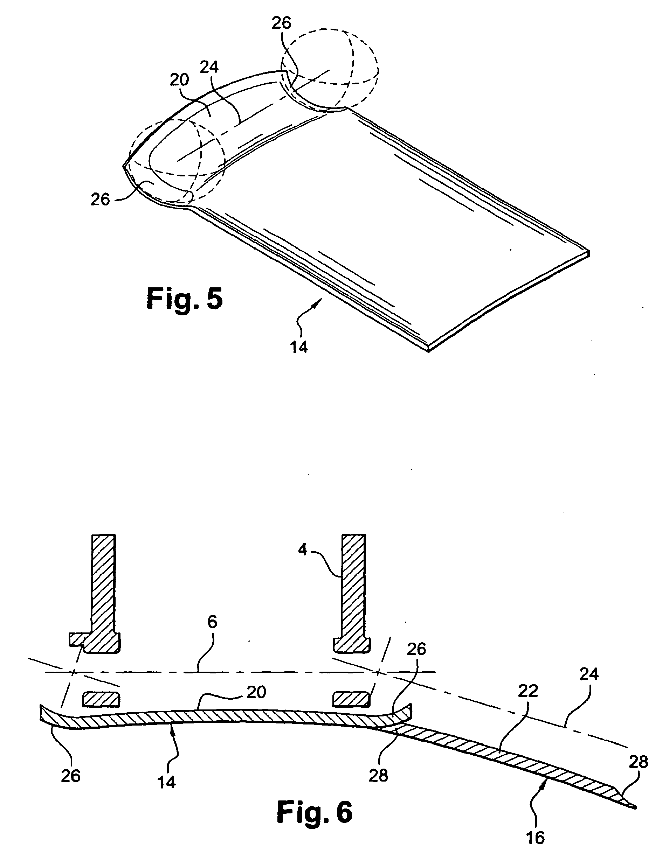

Grâce à cette caractéristique, les sections de fuite dans les zones de recouvrement des volets commandés 14 et suiveurs 16, au niveau du joint périphérique 12 de sortie du canal de postcombustion, sont sensiblement supprimées comme on l'a représenté schématiquement en figure 6.

L'étanchéité longitudinale entre les volets commandés 14 et les volets suiveurs 16 est assurée par appui des bords longitudinaux 30 des volets suiveurs 16 sur les faces internes des volets commandés 14. Pour une meilleure étanchéité, les bords longitudinaux 30 des volets suiveurs 16 peuvent être usinés. Cela permet de réaliser les formes voulues avec une bonne précision, mais cela présente l'inconvénient de couper les fibres de céramique dont les extrémités sont alors apparentes sur les faces usinées des volets et sont susceptibles d'user assez rapidement les parties des autres volets sur lesquelles elles sont en appui.

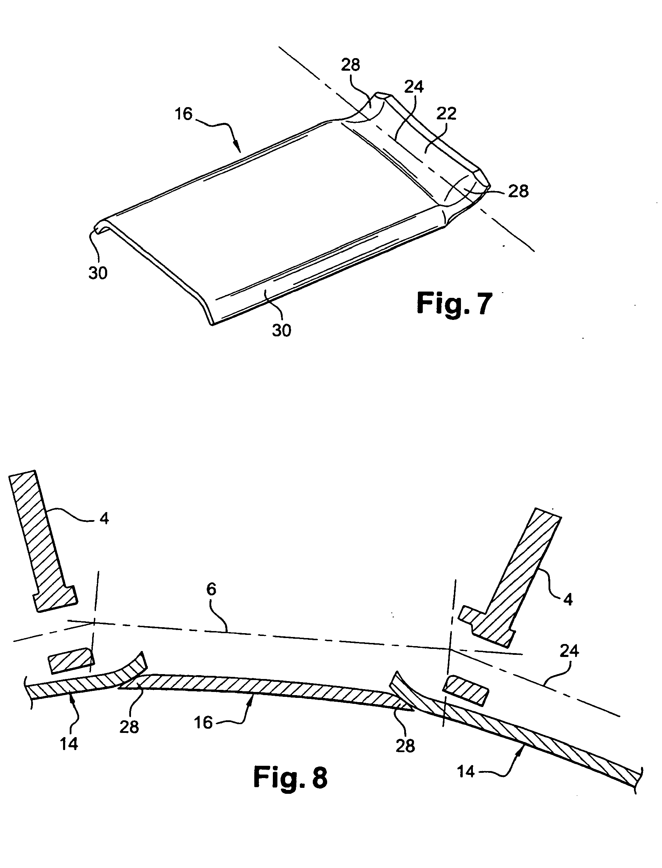

Pour éviter cet inconvénient, on n'usine pas les volets, et les bords longitudinaux 30 des volets suiveurs 16 sont conformés par pliage pour prendre une forme arrondie convexe comme représenté aux figures 7 et 8.

Les surfaces arrondies convexes 30 des volets suiveurs 16 qui sont en appui sur les faces internes des volets commandés 14 sont dépourvues d'extrémités de fibres céramiques susceptibles d'agresser les faces internes des volets commandés 14.

Avantageusement, les parties arrondies cylindriques 22 des volets suiveurs 16 et leurs extrémités 28 en forme de galettes sphériques sont également réalisées par formage, sans usinage, de même que les parties cylindriques 20 des volets commandés 14 et leurs extrémités 26 en portions de sphère.

Ces volets peuvent comporter, dans leurs parties en contact, un revêtement anti-abrasion, notamment lorsque ces parties sont réalisées par usinage.

On peut également prévoir que le joint périphérique d'étanchéité 12 monté en sortie du canal de postcombustion 8 soit réalisé en CMC pour réduire l'usure dans les zones de frottement sur les extrémités amont des volets commandés et des volets suiveurs.

## Revendications

1. Tuyère convergente de turboréacteur, comprenant une couronne de volets articulés formés de volets commandés (14) et de volets suiveurs (16) disposés en alternance et coopérant à leur extrémité amont avec un joint périphérique d'étanchéité (12) agencé en sortie d'un canal de postcombustion (8), les volets étant réalisés en matériau composite à matrice céramique, **caractérisée en ce que** les volets commandés (14) et suiveurs (16) sont formés d'une pièce avec des moyens d'appui (20, 22) sur le joint périphérique (12) précité à leur extrémité amont et avec des moyens (30) d'appui sur les bords longitudinaux des volets adjacents, réalisant une étanchéité longitudinale entre les volets.

2. Tuyère convergente selon la revendication 1, **caractérisée en ce que** les volets (14, 16) sont également formés d'une pièce à leur extrémité amont avec des moyens (26, 28) d'articulation en rotation sur les extrémités amont des volets adjacents.

3. Tuyère convergente selon la revendication 2, **caractérisée en ce que** lesdits moyens (26, 28) d'articulation en rotation sont des moyens d'articulation à rotule.

4. Tuyère convergente selon l'une des revendications précédentes, **caractérisée en ce que** l'extrémité amont de chaque volet (14, 16) comporte une partie cylindrique de révolution (20, 22) qui est orientée transversalement par rapport à l'axe de tuyère et tangentiellement au joint périphérique (12) et dont une surface cylindrique convexe est en appui sur le joint périphérique (12).

5. Tuyère convergente selon la revendication 4, **caractérisée en ce que** la concavité de la partie cylindrique de révolution (20, 22) est orientée vers l'extérieur par rapport à l'axe de la tuyère.

6. Tuyère convergente selon la revendication 4 ou 5, **caractérisée en ce que** les extrémités latérales de la partie cylindrique de révolution (20, 22) sont conformées en portions de sphère (26, 28) et forment des moyens d'articulation en rotation sur les volets adjacents.

7. Tuyère convergente selon la revendication 6, **caractérisée en ce que** les portions de sphère (26, 28) ont des concavités tournées vers l'extérieur par rapport à l'axe de la tuyère.

8. Tuyère convergente selon la revendication 6 ou 7, **caractérisée en ce que** les portions de sphère (26) formées à l'extrémité amont des volets commandés (14) forment des rotules reçues dans des logements formés par les portions de sphère (28) des extrémités amont des volets suiveurs (16).

9. Tuyère convergente selon l'une des revendications 6 à 8, **caractérisée en ce que** les centres des portions de sphère (26, 28) sont situés sur les axes (24) des parties cylindriques (20, 22) des extrémités amont des volets.

10. Tuyère convergente selon l'une des revendications précédentes, **caractérisée en ce que** l'étanchéité longitudinale entre les volets est réalisée par appui des volets commandés (14) sur les bords longitudinaux (30) des volets suiveurs (16), ces bords longitudinaux étant à section transversale de forme incurvée convexe.

11. Tuyère convergente selon l'une des revendications 4 à 10, **caractérisée en ce que** les parties cylindriques de révolution (20, 22) et les portions de sphère (26, 28) des extrémités amont des volets (14, 16) sont réalisées par moulage ou mise en forme sans usinage.

12. Tuyère convergente selon la revendication 10, **caractérisée en ce que** les portions de sphère (28) des extrémités amont des volets suiveurs (16) et leurs bords longitudinaux (30) à section transversale convexe sont réalisés par usinage.

13. Tuyère convergente selon la revendication 10, **caractérisée en ce que** les portions de sphère (28) des extrémités amont des volets suiveurs (16) et leurs bords longitudinaux (30) à section transversale convexe sont réalisés par pliage et formage sans usinage.

14. Tuyère convergente selon l'une des revendications précédentes, **caractérisée en ce que** le joint périphérique d'étanchéité (12) est réalisé en matériau composite à matrice céramique.

15. Tuyère convergente selon l'une des revendications précédentes, **caractérisée en ce que** les volets (14, 16) sont recouverts au moins partiellement d'un revêtement anti-abrasion, à leurs extrémités amonts et le long de leurs bords longitudinaux.

## Claims

1. A convergent turbojet exhaust nozzle comprising a ring of hinged flaps made up of controlled flaps (14) and of follower flaps (16) disposed in alternation and cooperating at their upstream ends with a peripheral sealing gasket (12) arranged at the outlet from an afterburner channel (8), the flaps being made out of a ceramic-matrix composite material, **characterized in that** the controlled flaps (14) and the follower flaps (16) are made integrally with bearing means (20, 22) at its upstream end for bearing against the above-mentioned peripheral gasket (12), and with bearing means (30) for bearing against the longitudinal edges of the adjacent flaps for providing longitudinal sealing between flaps.

2. A convergent exhaust nozzle according to claim 1, **characterized in that**, at its upstream end, each flap (14, 16) is also made integrally with hinge means (26, 28) pivotally connected to the upstream ends of the adjacent flaps.

3. A convergent exhaust nozzle according to claim 2, **characterized in that** said pivot hinge means (26, 28) are spherical-joint means.

4. A convergent exhaust nozzle according to any preceding claim, **characterized in that** the upstream end of each flap (14, 16) includes a circularly-cylindrical portion (20, 22) that is oriented transversely relative to the axis of the exhaust-nozzle, and tangentially relative to the peripheral gasket (12), and having a convex cylindrical surface that bears against the peripheral gasket (12).

5. A convergent exhaust nozzle according to claim 4, **characterized in that** the concave side of the circularly-cylindrical portion (20, 22) faces outwards away from the axis of the exhaust nozzle.

6. A convergent exhaust nozzle according to claim 4 or claim 5, **characterized in that** the lateral ends of the circularly-cylindrical portion (20, 22) are shaped into spherical portions (26, 28) and form hinge means pivoted on the adjacent flaps.

7. A convergent exhaust nozzle according to claim 6, **characterized in that** the spherical portions (26, 28) have concave sides that face outwards away from the axis of the exhaust nozzle.

8. A convergent exhaust nozzle according to claim 6 or claim 7, **characterized in that** the spherical portions (26) formed at the upstream ends of the controlled flaps (14) form balls that are received in sockets formed by the spherical portions (28) of the upstream ends of the follower flaps (16).

9. A convergent exhaust nozzle according to any one of claims 6 to 8, **characterized in that** the centers of the spherical portions (26, 28) are situated on the axes (24) of the cylindrical portions (20, 22) of the upstream ends of the flaps.

10. A convergent exhaust nozzle according to any preceding claim, **characterized in that** longitudinal sealing between the flaps is achieved by the controlled flaps (14) bearing against the longitudinal edges (30) of the follower flaps (16), the longitudinal edges having a convex curved shape in cross-section.

11. A convergent exhaust nozzle according to any one of claims 4 to 10, **characterized in that** the circularly-cylindrical portions (20, 22) and the spherical portions (26, 28) of the upstream ends of the flaps (14, 16) are made by molding or shaping, without machining.

12. A convergent exhaust nozzle according to claim 10, **characterized in that** the spherical portions (28) of the upstream ends of the follower flaps (16) and their longitudinal edges (30) of convex cross-section are made by machining.

13. A convergent exhaust nozzle according to claim 10, **characterized in that** the spherical portions (28) of the upstream ends of the follower flaps (16) and their longitudinal edges (30) of convex cross-section are made by folding and forming, without machining.

14. A convergent exhaust nozzle according to any preceding claim, **characterized in that** the peripheral sealing gasket (12) is made out of ceramic-matrix composite material.

15. A convergent exhaust nozzle according to any preceding claim, **characterized in that** the flaps (14, 16) are coated at least part in an anti-abrasion coating at their upstream ends and along their longitudinal edges.

## Patentansprüche

1. Konvergente Schubdüse für Turbotriebwerke, mit einem Kranz angelenkter Klappen, die aus gesteuerten Klappen (14) und Folgeklappen (16) bestehen, die abwechselnd angeordnet sind und an ihrem vorderen Ende mit einer Außendichtung (12) zusammenwirken, die am Auslass eines Nachverbrennungskanals (8) angebracht ist, wobei die Klappen aus Verbundstoff mit Keramikmatrix bestehen,
**dadurch gekennzeichnet,**
**dass** die gesteuerten Klappen (14) und die Folgeklappen (16) in einem Stück mit Anlagemitteln (20, 22), um mit ihrem vorderen Ende auf der oben genannten Außendichtung (12) aufzuliegen, und mit Anlagemitteln (30), um auf den Längsrändern der angrenzenden Klappen aufzuliegen, ausgeführt sind, wodurch eine Längsdichtigkeit zwischen den Klappen hergestellt wird.

2. Konvergente Schubdüse nach Anspruch 1,
**dadurch gekennzeichnet,**
**dass** die Klappen (14, 16) ferner an ihrem vorderen Ende in einem Stück mit Mitteln (26, 28) zur Drehgelenkverbindung mit den vorderen Enden der angrenzenden Klappen ausgebildet sind.

3. Konvergente Schubdüse nach Anspruch 2,
**dadurch gekennzeichnet,**
**dass** diese Mittel (26, 28) zur Drehgelenkverbindung aus Kniegelenkverbindungsmitteln bestehen.

4. Konvergente Schubdüse nach einem der vorherigen Ansprüche,
**dadurch gekennzeichnet,**
**dass** das vordere Ende jeder Klappe (14, 16) einen zylindrisch umlaufenden Teil (20, 22) aufweist, der quer zur Düsenachse und tangential zu der Außendichtung (12) ausgerichtet ist und der mit einer konvexen, zylindrischen Oberfläche in Anlage an der Außendichtung (12) ist.

5. Konvergente Schubdüse nach Anspruch 4,
**dadurch gekennzeichnet,**
**dass** der zylindrisch umlaufende Teil (20, 22) gegenüber der Düsenachse nach außen gerichtet ist.

6. Konvergente Schubdüse nach Anspruch 4 oder 5,
**dadurch gekennzeichnet,**
**dass** die seitlichen Enden des zylindrisch umlaufenden Teils (20, 22) als Kugelabschnitte (26, 28) geformt sind und Mittel zur Drehgelenkverbindung mit den angrenzenden Klappen bilden.

7. Konvergente Schubdüse nach Anspruch 6,
**dadurch gekennzeichnet,**
**dass** die Kugelabschnitte (26, 28) Aushöhlungen aufweisen, die gegenüber der Düsenachse nach außen gerichtet sind.

8. Konvergente Schubdüse nach Anspruch 6 oder 7,
**dadurch gekennzeichnet,**
**dass** die Kugelabschnitte (26), die am vorderen Ende der gesteuerten Klappen (14) gebildet sind, Kugelschalen bilden, die in Aufnahmen sitzen, die von den Kugelabschnitten (28) der vorderen Enden der Folgeklappen (16) gebildet werden.

9. Konvergente Schubdüse nach einem der Ansprüche 6 bis 8,
**dadurch gekennzeichnet,**
**dass** sich die Mittelpunkte der Kugelabschnitte (26, 28) auf den Achsen (24) der zylindrisch umlaufenden Teile (20, 22) der vorderen Enden der Klappen befinden.

10. Konvergente Schubdüse nach einem der vorherigen Ansprüche,
**dadurch gekennzeichnet,**
**dass** die Längsdichtigkeit zwischen den Klappen durch Anliegen der gesteuerten Klappen (14) an den Längsrändern (30) der Folgeklappen (16) hergestellt wird, wobei diese Längsränder einen konvex gebogenen Querschnitt aufweisen.

11. Konvergente Schubdüse nach einem der Ansprüche 4 bis 10,
**dadurch gekennzeichnet,**
**dass** die zylindrisch umlaufenden Teile (20, 22) der vorderen Enden der Klappen (14, 16) durch Gießen oder Formen ohne Bearbeitung hergestellt sind.

12. Konvergente Schubdüse nach Anspruch 10,
**dadurch gekennzeichnet,**
**dass** die Kugelabschnitte (28) der vorderen Enden der Folgeklappen (16) und ihre Längsränder (30) mit konvexem Querschnitt durch Bearbeitung hergestellt sind.

13. Konvergente Schubdüse nach Anspruch 10,
**dadurch gekennzeichnet,**
**dass** die Kugelabschnitte (28) der vorderen Enden der Folgeklappen (16) und ihre Längsränder (30) mit konvexem Querschnitt durch Biegen und Formen ohne Bearbeitung hergestellt sind.

14. Konvergente Schubdüse nach einem der vorherigen Ansprüche,
**dadurch gekennzeichnet,**
**dass** die Außendichtung (12) aus Verbundstoff mit Keramikmatrix hergestellt ist.

15. Konvergente Schubdüse nach einem der vorherigen Ansprüche,
**dadurch gekennzeichnet,**
**dass** die Klappen (14, 16) an ihren vorderen Enden und entlang ihrer Längskanten zumindest teilweise mit einer Abriebschutzbeschichtung versehen sind.
